Europäisches Patentamt

European Patent Office

Office européen des brevets

(19)

(11) Publication number: **0 177 311**
**A2**

(12) **EUROPEAN PATENT APPLICATION**

(21) Application number: **85306932.6**

(22) Date of filing: **27.09.85**

(51) Int. Cl.⁴: **G 11 B 7/24**
**G 11 B 7/26**

(30) Priority: **03.10.84 GB 8424948**

(43) Date of publication of application:
**09.04.86 Bulletin 86/15**

(84) Designated Contracting States:
**AT BE CH DE FR GB IT LI LU NL SE**

(71) Applicant: IMPERIAL CHEMICAL INDUSTRIES PLC
Imperial Chemical House Millbank
London SW1P 3JF(GB)

(71) Applicant: TDK Corporation
13-1, Nihonbashi 1-chome Chuo-Ku
Tokyo-to(JP)

(72) Inventor: Kuroiwa, Akihiko
884-1-936, Kamikuratacho Totsuka-ku
Yokohama 224(JP)

(72) Inventor: Suda, Minoru
5-6-5-207 Kamitsuruma
Sagamihara 228(JP)

(74) Representative: Hall, David Brian et al,
Imperial Chemical Industries PLC Legal Department
Patents Po Box 6
Welwyn Garden City Herts, AL7 1HD(GB)

(54) **Optical recording medium.**

(57) An optical recording medium, such as a laser disc or card, comprises a substrate supporting a layer of recording material for storing data as a multiplicity of bits, eg in binary code with the presence or otherwise of a thermally formed pit or other positive mark at each target (single bit) position providing a readable recording of the two binary states, the improvement residing in the division of the recording layer into a multiplicity of finite small number of bits of information, eg 1-16 bits but preferably 1 bit, each area being defined by an optically detectable discontinuity around at least part of its periphery. The precise location of each target position can be found by detecting the discontinuity at the edge of each area using tracking optics, and each bit written, read or erased without any degradation of signal being caused by imprecise identification of the target position. To facilitate pit erasure, each recording area may comprise a discrete portion of recording material located totally within a depressed area of the substrate surface.

FIG 1

Z|QM.33247|

## OPTICAL RECORDING MEDIUM

The invention relates to recording media that are optically recordable, and in particular to media for storing information in machine readable form as a multiplicity of discrete bits, e.g. in binary code, the term "information" being used broadly herein to include such (sometimes otherwise excluded) aspects of information as numerical data and machine control instructions, in addition to pure encyclopaedic information.

Various forms of optical recording media of a kind comprising a substrate supporting a layer of active material to provide an optically readable effect in response to a predetermined stimulus, are known, information being stored as a multiplicity of bits by applying the stimulus to a varying degree in subsequently identifiable target positions in the active layer. The bits are normally read using a laser, each target position being passed in turn through the optical path of light from the laser, and the amount of light reflected or transmitted at each position being read, for example, as a high or a low level signal when the information is recorded in the form of a binary code. Perhaps the most widely known form of such optical recording media is the so-called "laser disc" which is rotatable to bring each of the target positions in line with writing or reading laser optics, in turn. By combining the rotatable motion with a relative transverse linear motion so as to effect relative movement either towards or away from the disc's axis of rotation, either continuously or in discrete steps, the target positions may conveniently be in the configuration of a helix or of concentric circles, respectively, around that axis of rotation. However, sequential recording of the information bits can be provided in other ways, eg. by writing the bits in parallel rows onto a rectangular card, and providing linear movement along each row in turn as they are read.

Various ways have been devised for providing an optically detectable effect. These include solid state changes between amorphous and crystal states, orientation changes eg. in polarisation or liquid crystals, phase changes, changes in the spectrum, and aggregation or deposition in the target area. But perhaps the most widely known way of recording information in an optically machine readable form, resides in the formation of discrete pits by using a thermally deformable material to provide the active layer, and impulsively heating selected positions of the layer in turn to form a series of pits. For example the active layer may be a low melting point resin containing a dye or pigment for converting light absorbed from a writing laser into heat for melting the resin. When the energy is absorbed very rapidly, the molten material becomes displaced leaving a pit with a raised rim of displaced material. The recording medium is adapted to provide a change in reflectivity or colour, and so the two states of a binary code bit can be provided by the presence or absence of a pit at each target position, or even by a deep pit or shallow pit at each such position (although the former is generally preferred as giving maximum difference between the two states). However, in order to include the various ways of recording the information, we shall refer to the code as being represented by a positive mark (eg. a pit, a generated colour, an aligned area of liquid crystal, etc) representing one state of the code, and a negative mark (eg. a different colour) or an absence of positive mark, representing another state of the code.

In order to read the stored information unequivocally, it is necessary to know with a high degree of precision where each target position is located on the surface. Where the location of each target position cannot be identified with sufficient precision, problems which can arise include, for example, mistaking an unwritten area adjacent to a target position for the target position without any positive mark, or reading only part of a target position having a positive mark such as a deep pit, and thereby confusing it with a target position having a negative mark such as a shallow pit, as the case may be. One conventional way of identifying the locations of target positions is to time a journey of write/read optics along a helical path, for example, but it is difficult to carry this out with adequate precision, especially when writing and reading on different machines.

According to the present invention, we provide an optical recording medium comprising a substrate and a layer of active material supported on a surface of the substrate, the material being active to provide an optically detectable effect in response to a predetermined stimulus thereby to enable information to be stored in machine readable form as discrete bits of information by applying the stimulus to a varying degree in subsequently identifiable target positions on the substrate surface, characterised in that the layer of active material is divided into a multiplicity of recording areas of a size appropriate for recording a finite small number of bits of information, each area being defined by an optically-detectable discontinuity around at least part of the periphery of that recording area.

Thus the present recording medium is divided into a multiplicity of areas whose positions can be identified positively by their peripheral discontinuities, and hence the smaller each area is made, the more positively can each target position be identified. In the extreme (and preferred) case each recording area is of a size appropriate for recording only a single bit of information (i.e. having only a single target position), and the precise position of each bit of information can then be identified positively by detecting its peripheral discontinuity. However, the loss of precision need not be significant in practice when using slightly larger recording areas to contain a small number of bits e.g. up to 32 bits, but preferably only from 1 to 16 bits. It can be particularly convenient at times to provide recording areas of a size appropriate for recording a single information unit, e.g. one byte.

The present medium with its many small recording areas, even those containing as many as 32 bits, should not be confused, however, with known configurations of laser discs in which the recording material is set out in a spiral or circular track and divided into sectors, with address data permanently encoded between adjacent sectors. Thus, for example, a such previously known disc of 13 cm diameter may have about 125 such sectors in a typical circular track of 10 cm diameter. Even if each bit occupied a space 1 μm in diameter with a further 1 μm between adjacent bits, the track would contain more than $1.5 \times 10^5$ bits and each sector would contain more than $1.2 \times 10^3$ bits. It is such known devices, having large numbers of bits per sector without any positive means for identifying the position of each bit within the sector, that experience the above described difficulties in obtaining precise location of the target positions, even when preformed tracks and precise timing circuitry are used. The present small recording areas may be used to subdivide such sectors into individual portions whose positions can be precisely defined by their discontinuities, but they can also be used with other forms of synchronising markings. In particular, they do not require (but can be used with) a preformed track, as they have their own individual discontinuities capable of being detected by tracking optics. With such improved positional identification not only can the state of the active material then be read with a greater certainty, but the expense of complex electrical circuitry, eg. with complex internal clock, that is otherwise generally necessary for obtaining just adequate precision in locating the target position, can be avoided.

Provided sufficient of the periphery is defined for enabling tracking optics positively to determine the position of the corresponding recording area accurately, it is not essential for the discontinuity to extend continuously right around each discrete area. Thus for example, the position of single bit areas arranged on a disc in the form of a helix about the axis of disc rotation, can be positively identified by a pair of spaced helical discontinuities defining the two edges of the helix (or a single helical discontinuity for very close packing of the information) together with further discontinuities transverse with respect to the helix (i.e. radial with respect to the disc) to define the leading edge of each recording area. It may then be unnecessary in such designs to define the trailing edge.

However, in general we do prefer to define each recording area by a discontinuity which extends continuously and completely around its periphery.

Our preferred recording medium is one in which the layer of active material is divided into a multiplicity of separate portions, each recording area having its own discrete portion of active material. The edge of each portion of recording layer can be used as a discontinuity for defining the recording area, but there is a danger that during reading of recorded information, the edge of the active material could become confused with the edge of a pit or other positive mark in which the depth of the active layer has been changed. Accordingly, we prefer that the substrate has a multiplicity of depressions or of elevated areas corresponding to the recording areas, the physical discontinuities between the level of the substrate surface within the depressed or elevated areas respectively and the level of the remainder of the substrate surface being detectable by tracking optics and defining the peripheries of the recording areas. We find that this can give an unambiguous definition of the position and configuration of each individual recording area. Generally we prefer the recording areas to be in depressions rather than on elevated areas.

Particularly preferred is a combination of the two preferences of the preceding paragraph, that is a recording medium in which the substrate surface has a multiplicity of depressed areas, each depressed area totally containing a single discrete portion of the active material to provide one of the said recording areas, its optically detectable discontinuity being provided by the different substrate levels defining the periphery of the depressed area. In such particularly preferred media we have found that in addition to the advantages of greater precision in identifying the positions of the respective recording areas, as described above, we can derive a further unexpected advantage. When conventionally writing certain positive marks along adjacent paths, whether in concentric circles, helices or parallel straight lines, for example, without the present individual discrete depressions, one track can easily interact with an adjacent track, both during writing and during reading. This can also be particularly troublesome for example when erasing pits with a beam adapted to ensure heating of the material thrown up around the rim of each pit. By retaining all the active material within the confines of its own depression according to the present invention, none of such problems need arise. Furthermore, during an erase action in which the whole area of the active recording layer within the depression is heated, a smooth surface can result, even though the pits may have already been formed and erased over many cycles. By contrast, when using a conventional medium (i.e. without the benefit of the present depression) in a cycle of forming and erasing pits carried out on a continuous layer of recording material, the surface of the recording layer does not become completely flat again, and hence deterioration of the recording medium tends to be caused by repeated write/erase cycles.

According to a further aspect of the invention there is provided a method for manufacturing one preferred configuration of optical recording medium, which comprises providing a substrate having a flat planar surface in which are formed a multiplicity of depressed areas each substantially of a size appropriate for recording a finite small number of bits of information, and depositing an active material on to the substrate surface at least within the depressed areas, the material being active to provide an optically detectable effect in response to a predetermined stimulus. A preferred method is one in which the active material is provided as a multiplicity of discrete portions, either during deposition of the material or as a subsequent step, the portions being located such that each depressed area has a single one of said portions located totally within its area as defined by the different substrate levels around its periphery.

According to a still further aspect of the invention there is provided a method for manufacturing an alternative configuration of optical recording medium of the kind disclosed herein, which method comprises providing a substrate having a flat planar surface and depositing on to that surface a plurality of discrete portions of an active material, the deposited material being active to provide an optically detectable effect in response to a predetermined stimulus and the discrete portions being of an area appropriate for recording a finite small number of bits of information.

The recording layer of active material may typically have a uniform thickness within the range 0.001 to 10 µm, depending on the nature of its activity, and similar dimensions may also be suitable for the widths and lengths of the discrete recording areas, although these values can all be varied individually according to the requirements of each particular application, without detracting from the benefits of using the present invention. Depressions to receive the active material can be formed in substrates made from deformable material by stamping them out mechanically. However, for the smaller sizes in particular, we prefer to form depressions or elevated areas using photographic techniques, eg. using photoresists and etching a preformed substrate, or building up a substrate surface to the required shape by using a photosensitive polymer and suitable mask.

For example we have made discs according to the invention by making a substrate, with a flat planar surface, from a plastics material which is wettable by organic liquid compositions. A photo resist was then spin-coated onto the surface to provide a thin oil-expelling layer, and this was subsequently photo-etched to produce a multiplicity of holes extending through to the substrate. Spin coating with an oil-based composition of active material, then resulted in the composition being deposited on the wettable surface within the holes but not remaining on the oil-expelling layer covering the rest of the substrate, thereby providing a multiplicity of discrete portions of the recording material.

This general method can be applied with variations to achieve a variety of different results. For example the photoetching process can be extended in order to etch a depression in the substrate at the bottom of each hole through the resist layer, filling the depressions with active material, and removing the resist layer, thereby providing a disc with a homogeneous substrate having in one surface a multiplicity of tiny depressions each filled with active material. Alternatively, if the etching reaches but is not allowed to penetrate the substrate, and if the resist is retained during use of the disc after having its holes filled with active material, such a disc will effectively comprise a two-ply substrate with discrete portions of active material located in depressions in one surface of that substrate. A further usefull varient is one manufactured in essentially the same manner except that the resist is removed after its etched holes have been filled with active material, thereby providing a homogeneous substrate having a planar surface on which are supported a multiplicity of discrete portions of active material. Other variants include the addition of further layers, eg. as part of the substrate or as an outer protective layer. The former may include a reflective layer or an electrode, for example.

The invention is illustrated by reference to specific embodiments of which small portions are shown in enlarged scale in the accompanying drawings, in which

Figures 1-6 are plan views of small areas of the surface of five different embodiments, and

Figures 7-11 are sections through similar small surface portions.

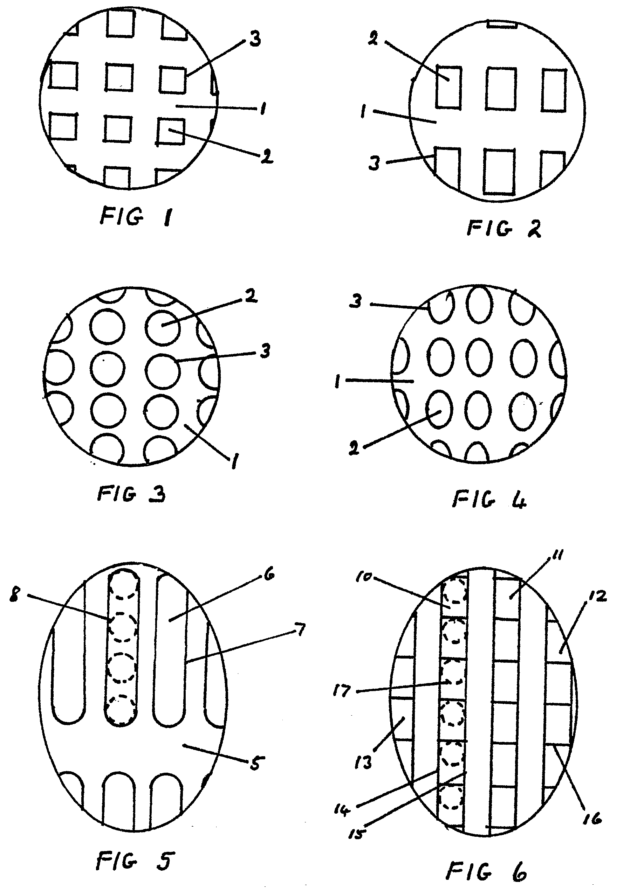

Of Figures 1-4, each shows a surface 1 of a recording medium, such as a laser-readable disc or rectangular card for example, having a plurality of discrete recording areas 2 arranged in an ordered array, only a very small portion of the total area and its multiplicity of such recording areas, being shown. Each recording area is of a size appropriate for recording a single bit of information, typically about 1 $\mu$m in diameter for example and is defined by an opticaly detectable discontinuity 3 right around its periphery. Although square, rectangular, circular and elliptical recording areas have been shown, other shapes could also be used for most applications. Preferred, however are the circular and elliptical configurations.

Figure 5 similarly shows a substrate surface 5 having an array of recording areas 6, those shown being only a small fraction of the total in the surface. As in the preceeding drawings, the recording areas are defined by a peripheral discontinuity 7, but unlike those others, these recording areas are of a size appropriate for recording a whole unit of information consisting (in this particular example) of four bits, the area appropriate for each of these bits being shown by the hatched lines 8 superimposed on one of the recording areas.

In the embodiment shown in Figure 6 the recording material is in the configuration of continuous, substantially parallel, strips 10, 11, 12, in the small area shown, but on the surface as a whole all four strips are part of the same continuous helix. The edges of strips are each defined by a discontinuity 14, 15, in this case a difference in levels, and at intervals along each strip is a further, transverse discontinuity 16, provided by a step change in the depth of the strip. These transverse discontinuties provide a machine readable indication of the leading edge of each recording area indicated in one strip by superimposed hatched circles 17. These transverse discontinuities positively identify the positions of the recording areas with the minimum of signals, but still provide a breathing space between adjacent areas to avoid overlap or print through from one area to the next.

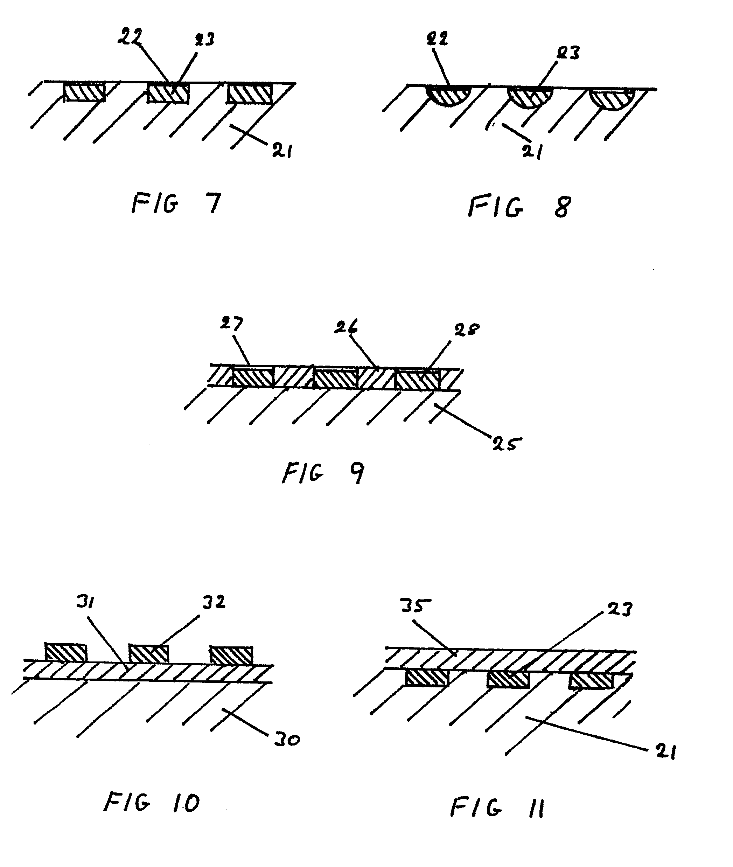

In Figures 7 and 8, the sections show a homogeneous substrate 21 with depressions 22, into which are provided individual discrete portions of active material 23.

In Figure 9 the substrate is a two-ply substrate comprising a base 25 and a superimposed layer 26 through which extend a plurality of holes 27 shaped to contain discrete portions 28 of active material.

The embodiment of Figure 10 comprises a substrate base 30, an intermediate layer 31, e.g. an electrode (for liquid crystal displays) or reflective material, with discrete portions of active recording material 32 supported on that layer.

The embodiment of Figure 11 is substantially as shown in Figure 7, comprising a substrate 21, depressions 22 and discrete portions of active material 23, but having additionally a protective layer 35 superimposed over the whole area.

The various drawings have been selected to illustrate particular features, but they should not be considered in isolation as any of the configuration shown in Figures 1-6 can be used in the structures of Figure 7-11, and various of the latter group can be combined. For example when using the intermediate layer 31 of Figure 10 as an electrode for controling liquid crystal displays, it is preferred to support the discrete portions 32 of active material (liquid crystal) in individual holes 27 within a superimposed layer 26 as shown in Figure 9, and to cover them with a protective layer 35 as shown in Figure 11.

CLAIMS

1.    An optical recording medium comprising a
substrate and a layer of active material supported on a
surface of the substrate, the material being active to
provide an optically detectable effect in response to a
predetermined stimulus, thereby to enable information
to be stored in machine readable form as discrete bits
of information by applying the stimulus to a variable
degree in subsequently identifiable target positions on
the substrate surface, characterised in that the layer
of active material is divided into a multiplicity of
recording areas of a size appropriate for recording a
finite small number of bits of information, each area
being defined by an optically-detectable discontinuity
around at least part of the periphery of that recording
area.

2.    A recording medium as claimed in Claim 1 in
which the recording areas are of a size appropriate for
recording from 1-16 bits.

3.    A recording medium as claimed in Claim 2 in
which the recording areas are of a size appropriate for
recording only 1 bit.

4.    A recording medium as claimed in Claim 1 or
Claim 2 in which the recording areas are of a size
appropriate for recording a single byte of
information.

5.    A recording medium as claimed in any one of the
preceding claims, in which each recording area is
defined by a discontinuity which extends continuously
and completely around its periphery.

6.    A recording medium as claimed in any one of the
preceding claims, in which the layer of active material
is divided into a multiplicity of separate portions,
each recording area having its own discrete portion of
active material.

7.     A recording medium as claimed in Claim 6 in which the substrate surface has a multiplicity of depressed areas, each depressed area totally containing a single discrete portion of the active material to provide one of the said recording areas, its optically detectable discontinuity being provided by the different substrate levels defining the periphery of the depressed area.

8.     A method for manufacturing an optical recording medium, which comprises providing a substrate having a flat planar surface in which are formed a multiplicity of depressed areas each substantially of a size appropriate for recording a finite small number of bits of information, and depositing an active material on to the substrate surface at least within the depressed areas, the material being active to provide an optically detectable effect in response to a predetermined stimulus.

9.     A method as claimed in Claim 8 in which the active material is provided as a multiplicity of discrete portions, either during deposition of the material or as a subsequent step, the portions being located such that each depressed area has a single one of said portions located totally within its area as defined by the different substrate levels around its periphery.

10.     A method for manufacturing an optical recording medium which comprises providing a substrate having a flat planar surface and depositing on to that surface a plurality of discrete portions of an active material, the deposited material being active to provide an optically detectable effect in response to a predetermined stimulus and the discrete portions being of an area appropriate for recording a finite small number of bits of information.

FIG 1

FIG 2

FIG 3

FIG 4

FIG 5

FIG 6

FIG 7

FIG 8

FIG 9

FIG 10

FIG 11